Europäisches Patentamt

European Patent Office

Office européen des brevets

(11) Publication number: **0 504 801 A2**

# EUROPEAN PATENT APPLICATION

(21) Application number: **92104586.0**

(22) Date of filing: **17.03.92**

(51) Int. Cl.5: **G11B 20/18**, G11B 27/36,
G11B 20/10, //G11B20/12

(30) Priority: **17.03.91 JP 76786/91**

(43) Date of publication of application:
**23.09.92 Bulletin 92/39**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Okihara, Daijirou**
**c/o Sony Corporation, 7-35 Kitashinagawa**
**6-chome**
**Shinagawa-ku, Tokyo(JP)**

(74) Representative: **Melzer, Wolfgang, Dipl.-Ing. et**
**al**
**Mitscherlich und Partner, Steinsdorfstrasse**
**10**
**W-8000 München 22(DE)**

(54) **Data recording method and apparatus.**

(57) A data recording method and apparatus records a record data (REC) with sequentially adding block numbers (BLNO) at every predetermined block, and the reproduction data (PB; RAW) obtained by simultaneous reproduction are monitored. When detecting an error of the reproduction data (PB; RAW), data is recorded again from the data having block number (BLNO) with the error occurrence. Therefore, a bit error rate will be enhanced remarkably.

FIG. 3

EP 0 504 801 A2

## BACKGROUND OF THE INVENTION

This present invention relates to a data recording method and apparatus, and is applicable to a recording method of, for example, computer external memory and the like.

In a magnetic tape recording and reproducing apparatus of this kind, proposed hitherto is the so-called ID-1 format data recorder (ANSI x3.175-1990 19mm Type ID-1 Recorded Instrumentation), wherein recording tracks are formed obliquely in sequence on a magnetic tape, and thus desired data can be recorded and reproduced in high density.

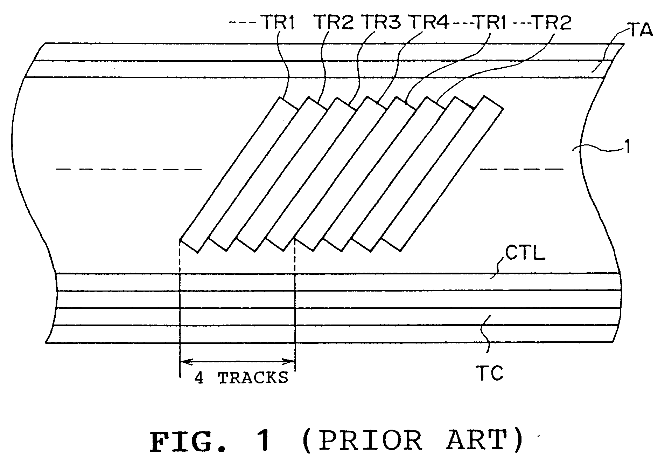

That is, as shown in Fig. 1, in such data recorder, a magnetic tape 1 is wound on a rotary drum rotating at a predetermined speed, the magnetic tape 1 is run at a predetermined speed, thereby forming recording tracks TR (...TR1, TR2, TR3, TR4, TR1, TR2, ...) obliquely in sequence by the magnetic head mounted on the rotary drum, and thus desired data is recorded on the recording track TR1.

Further in this case, the data recorder forms recording tracks TA, CTL and TC extending longitudinally on both upper and lower ends of the magnetic tape 1, and a track set identification (ID) of the recording tracks TR is recorded on the recording track CTL.

Here the track set identification (ID) is absolute position information beginning from the first of the magnetic tape 1, put between predetermined synchronizing signals, and is recorded at a 4-track period with reference to the recording tracks TR.

Further the recording tracks TA and TC are ready for recording user's controlling data and others, thus data recorded in high density on the recording tracks TR can be searched simply by reproducing the recording tracks TA, CTL and TC.

Further in the data recorder, when recording data on the recording tracks TR, an error detecting/correcting parity code comprising the so-called product code is applied to record the data concerned, thereby recording and reproducing desired data securely.

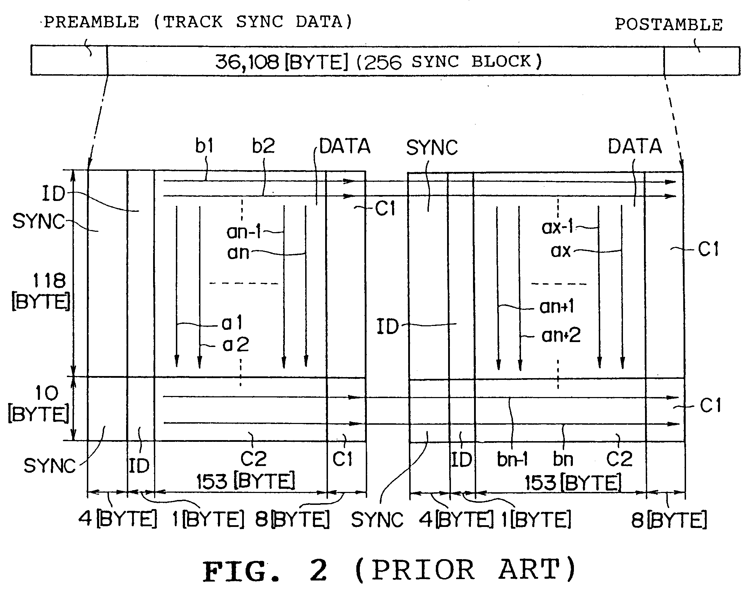

That is, as shown in Fig. 2, after loading in data DATA in a predetermined unit (= 36,108 [BYTE]), the data recorder divides the data DATA into 306 blocks, and applies Reed-Solomon error detecting/correcting code (comprising C2 code) at each block.

Further, after dividing the block into a first field FIELD0 and a second field FIELD1, the data recorder applies Reed-Solomon error detecting/correcting code (comprising C1 code) so as to come orthogonal with the C2 code.

Thus in the data recorder, a bit error rate can be enhanced by correcting erroneous reproducing data by means of the C1 and C2 codes in reproducing.

Further in the data recorder, when recording the data DATA with the C1 and C2 codes applied thereto in the magnetic tape 1, interleaving is effected at every recording tracks TR, thus where a drop-out or the like arises, the data DATA can be reproduced securely.

That is, in the data recorder, with reference to the data DATA inputted in the order indicated by arrows a1, a2, ..., an-1, an, an+1, an+2, ..., ax-1 and ax, the data DATA is recorded by changing the inputting order as indicated by arrows b1, b2, ..., bn-1 and bn, thereby interleaving the data DATA.

Further in the data recorder in this case, a synchronizing signal SYNC and sync block data ID are added at every predetermined unit (hereinafter called sync block), and preamble and postamble data are added as a whole to record the data DATA.

Thus in reproducing, in the magnetic recording and reproducing apparatus, the synchronizing signal SYNC, the sync block data ID and the data DATA are reproduced on the basis of track sync data included in the preamble, and subjected to deinterleaving on the basis of the synchronizing signal SYNC and the sync block data ID.

Further from interleaving, an error exceeding an error correcting capacity of the C1 and C2 codes is prevented from concentrating into one spot effectively even in case drop-out or the like has arisen.

Meanwhile, in the ID-1 format data recorder for reproducing desired data as described above, a bit error rate $10^{-10}$ which is sufficient practically as the data recording and reproducing apparatus intended mainly for measurement is ensured.

If the bit error rate can be enhanced to $10^{-15}$ or so, then it is conceivable that important data may be safedeposit from applying to a magnetic tape recorder for computer system working, for example, in banks or the like.

Accordingly, a serviceability of this kind of data recorder will be enhanced to expand the applicable field.

## SUMMARY OF THE INVENTION

In view of the foregoing, an object of this invention is to provide a data recording method and apparatus capable of enhancing the bit error rate remarkably as compared with a prior art one.

The foregoing object and other objects of the invention have been achieved by the provision of a data recording method comprising the steps of: recording record data at every predetermined block with adding sequentially block numbers on a record medium; monitoring reproduction data obtained by simultaneous reproducing the recorded data; and when an error of the reproduction data is detected, recording again the record data sequentially from the data having the same block number as the occurrence of error is detected on the record medium.

The recorded data is simultaneous reproduced. The reproduction data RAW obtained by simultaneous reproduction is monitored. When the occurrence of error of the reproducing data RAW is detected, the record data is recorded again from one which has a block number detected error. Thereby the record data REC can be re-recorded without stopping the movement of the recording medium.

The nature, principle and utility of the invention will become more apparent from the following detailed description when read in conjunction with the accompanying drawings in which like parts are designated by like reference numerals or characters.

## BRIEF DESCRIPTION OF THE DRAWINGS

In the accompanying drawings:

Fig. 1 is a diagram serving for illustration of a recording format on the magnetic tape according to ID-1 format;

Fig. 2 is a diagram serving for illustration of interleaving of ID-1 format;

Fig. 3 is a block diagram showing a general configuration of a computer system to which a magnetic recording method of the present invention is applied;

Figs. 4A and 4B are diagrams serving for illustration of a recording area on a magnetic tape;

Figs. 5A and 5B are diagrams serving for illustration of a format of a recording track on the magnetic tape;

Fig. 6 is a diagram serving for illustration of interleaving among the recording tracks;

Fig. 7 is a diagram serving for illustration of a track format on the magnetic tape;

Fig. 8 is a block diagram showing a configuration of a recording format control portion;

Fig. 9 is a block diagram showing a configuration of a reproducing format control portion;

Fig. 10 is a schematic view showing the record region of the embodiment; and

Fig. 11 is a schematic view explaining the manner of managing blocks.

Fig. 12A-12C are diagrams serving for illustration of the recording format;

Fig. 13A-13G are diagrams serving for illustrating the operation of recording;

Fig. 14A-14B are diagrams serving for illustrating a format of a recording track on the magnetic tape.

## DETAILED DESCRIPTION OF THE INVENTION

Preferred embodiments of this invention will be described with reference to the accompanying drawings:

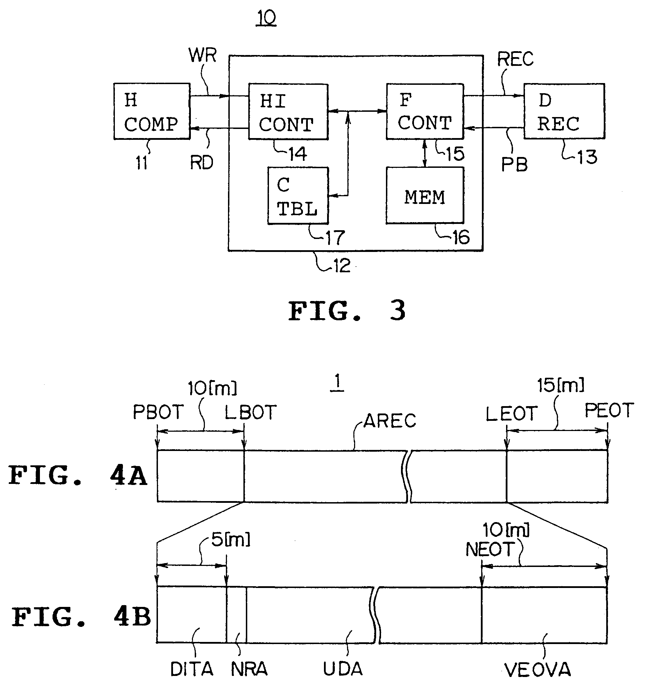

In Fig. 3 a reference numeral 10 denotes a schematic construction of a computer system to which the present invention is applied, wherein write data WR sent from a host computer 11 along with a write request is supplied to a data recorder 13 of ID-1 format as recording data REC through a data recorder control unit 12, and thus the write data WR is written in a recording track on the magnetic tape 1.

Then the magnetic tape 1 of the data recorder 13 is reproduced according to a read request inputted from the host computer 11, and reproducing data PB obtained in result is inputted to the host computer 11 as read data RD through the data recorder control unit 12.

The data recorder control unit 12 comprises a host interface control part 14 and a format control part 15, the host interface control part 14 controls a channel interface against the host computer 11, and the format control part 15 formats data transferred to the data recorder 13 by means of a memory 16.

Then, control information between the host interface control part 14 and the format control part 15 is transferred by reference to a control table 17.

Thus in the computer system 10, the data recorder control unit 12 provided as above is available to using the data recorder 13 as an external memory of the host computer 11 through the interface similar to a conventional magnetic tape recorder on a side of the host computer 11.

Here in the computer system 10, as shown in Figs. 4A and 4B, a central portion of the magnetic tape 1 loaded in the data recorder 13 which is comparatively less in damage rate of the tape itself longitudinally is intended for a recording area AREC, thereby enhancing a bit error rate.

That is, as shown in Fig. 4A, a position 10 [m] behind, for example, from a physical tip PBOT of the magnetic tape 1 is specified as a logical tip LBOT, a position 15 [m], for example, in front of a physical end PEOT of the magnetic tape 1 is specified as a logical end LEOT, and an area covering the logical tip LBOT to the logical end LEOT is intended for the recording area AREC.

In the recording area AREC, as shown in Fig. 4B, an area covering the logical tip LBOT to a position 5 [m] behind, for example, therefrom is intended for a directory information track area DITA.

Further, following the directory information track area DITA, an area covering the logical end LEOT to an end or around NEOT coming 10 [m], for example, in front thereof across a non-recorded area NRA is intended for user's recording track area UDA, and an area exceeding the end or around NEOT as far as the logical end LEOT is intended for a volume end information area LEOVA.

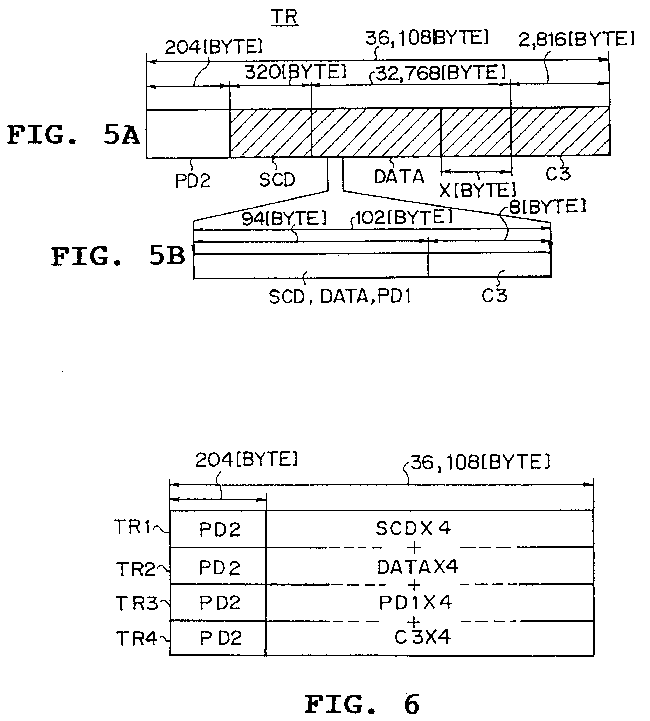

Here, in the computer system 10, a user data area 36,108 [BYTE] per recording track which is specified by ID-1 format is formatted as shown in Figs. 5A and 5B, and the formatted data is interleaved in 4 tracks, thereby enhancing a bit error rate.

That is, in the computer system 10, as shown in Fig. 5A, the write data WR from the host computer 11 is recorded as 32,768 [BYTE] recording data DATA comprising 1 block, for example, per recording track with 4 tracks as one set.

In this case, as for the recording data DATA coming less than 32,768 [BYTE] per recording track TR, a first supplementary data PD1 is added to be 32,768 [BYTE] as whole. Then, a subcode data SCD for 320 [BYTE] is prepared for loading additional information of the recording track TR.

Moreover, in the data recorder control unit 12, 8 [BYTE] Read-Solomon error detecting/correcting code (hereinafter called C3 code C3 according to the C1 and C2 codes in ID-1 format) is added, as shown in Fig. 5A, by means of a predetermined generator polynomial at every 94 [BYTE] of the subcode data SCD, the recording data DATA or the first supplementary data PD1, an error correction can be carried out more securely thereby, and thus a bit error rate can further be enhanced.

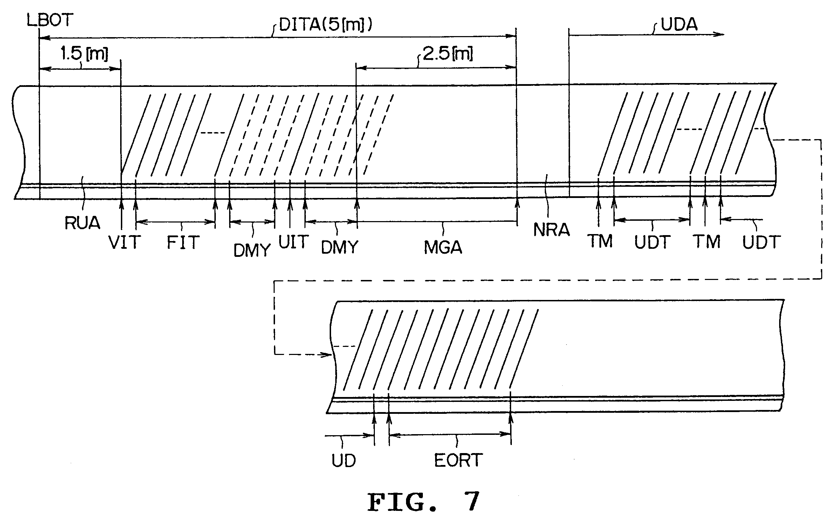

Further, as shown in Fig. 6, for the subcode SCD, the recording data DATA, the first supplementary data PD1 and the C3 code C3 thus formatted per recording track, data for four recording tracks TR1, TR2, TR3 and TR4 is interleaved among the tracks according to a predetermined process, thereby enhancing the bit error rate further.

Then, a second supplementary data PD2 of 204 [BYTE] is added ahead of data for each recording track interleaved for the four recording tracks TR1, TR2, TR3 and TR4, and thus data content for one recording track TR amounts to 36,108 [BYTE] specified by ID-1 format.

Then, from formatting the second supplementary data PD2 ahead as above, the supplementary data PD2 can be assigned to a magnetic head running-in portion of the recording tracks where the magnetic tape 1 is capable of damaging in most cases and a tracking is not stable, thereby enhancing further the bit error rate for the recording data DATA.

Here in the case of computer system 10, additional information loaded in the subcode data SCD comprises track classification information TRID indicating a classification of the corresponding recording track TR, a block number BLNO that the recording track TR belongs, a file number FLNO that the recording track TR belongs, a write retry frequency RTCT with reference to the recording tracks and a byte count BYCT of data included in the recording tracks.

Classification information of volume information table VIT, file information table FIT, update information table UIT, dummy data track information DMY or recording end information EOR is recorded in the track classification information TRID.

Here, as shown in Fig. 7 practically, volume information table VIT, file information table FIT, update information table UIT or dummy data track information DMY is used as the track classification information TRID of the recording track TR formed in the directory information track area DITA of the magnetic tape 1 first.

The directory information table DIT for managing files on the magnetic tape 1 as a whole is recorded in the directory information track area DITA, and the recording track comprising volume information table VIT is recorded first in a set of four tracks continuously to a 1.5 [m] rise area RUA from the logical tip LBOT of the magnetic tape 1.

First and final position information of the data block recorded in the user recording track area UDA with the whole magnetic tape 1 as one volume, length information of the file information table FIT and a block number of the data block wherein write retry has been executed in recording are recorded in the recording data DATA of the volume information table VIT.

The file information table FIT is recorded in 256 tracks continuing to the volume information table VIT. A first position information and a block length of the file are recorded in the recording data DATA of the file information table FIT in the unit of file recorded in the user recording track area UDA.

Further the dummy data track information DMY is recorded in succession to the file information table FIT in a predetermined track number, and the update information table UIT is recorded in the following four recording tracks. Information indicating whether or not updated is recorded in the recording data DATA of the update information table UIT.

Further in succession to the update information table UIT, dummy data track information DMY is recorded in the recording track 2.5 [m] from the first of the directory information track area DITA, and the remaining 2.5 [m] directory information track area DITA is secured as a margin area MGA.

Next, the user data track information UDT, the tape mark track information TM or the recording end information EOR is used as the track classification information TRID of the recording track TR formed in the user recording track area UDA across the non-recording area NRA in succession to the directory information track area DITA of the magnetic tape 1.

The recording track TR of the user data track information UDT for a plurality of blocks constructing one file is recorded among the recording tracks TR of the tape mark track information TM with four tracks as one unit as the recording track TR of the user recording track area UDA, and the recording track TR of the recording end information EOR is recorded in succession to the last of the user data track information UDT.

Then, the first supplementary data PD1 of 32,768 [BYTE] is recorded in the recording data DATA of the tape mark track information TM and the recording end information EOR, and data corresponding to the write data WA inputted from the host computer 11 is recorded in the recording data DATA of the recording track TR of the user recording track area UDA.

Thus, in the computer system 10, the directory information track area DITA is provided ahead of the magnetic tape 1, and a content of the user recording track area UDA is controlled in files, thus data recorded in the data recorder 13 is accessible like an external recording apparatus viewed from the host computer 11.

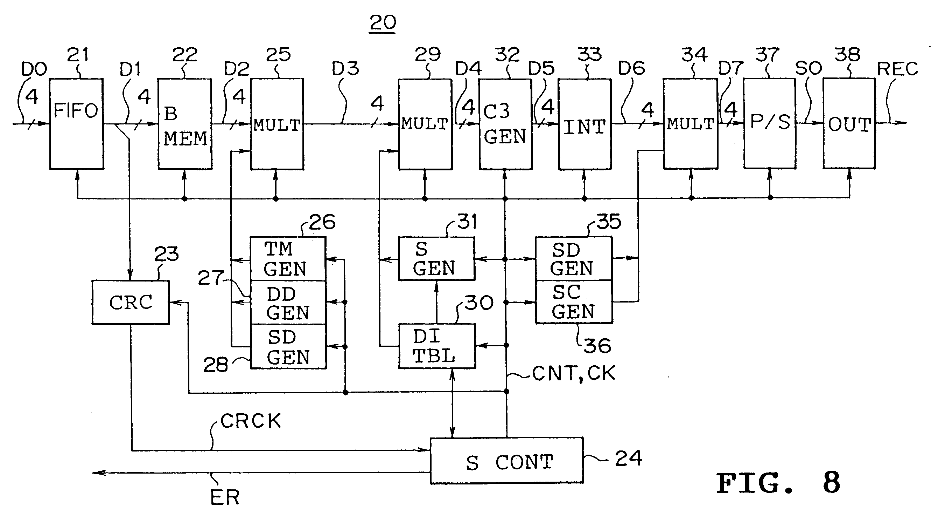

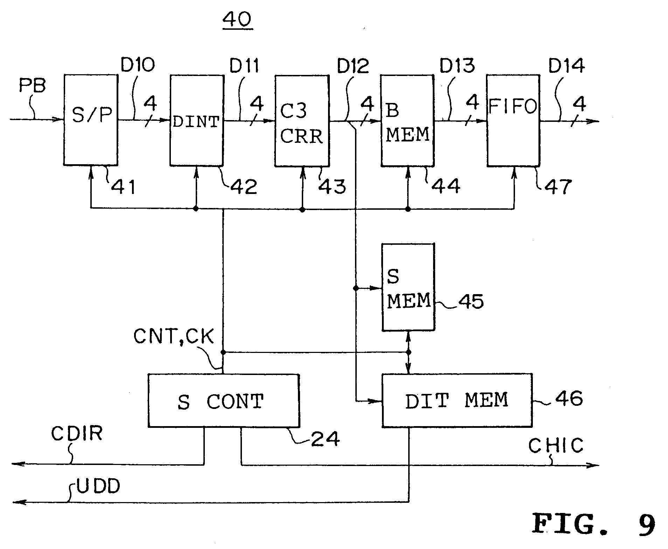

Here, the format control part 15 of the data recorder control unit 12 in the computer system 10 comprises a recording format control portion 20 and a reproducing format portion 40 as shown in Fig. 8 and Fig. 9 along with the memory 16.

That is, in the recording format control portion 20, from inputting data at every 32 bits to a memory (comprising first-in-first-out (FIFO)) circuit 21 from the host interface control part 14 as 4-channel 8-bit parallel write data D0, the write data D0 is synchronized with an internal clock CK, which is written in a buffer memory 22 as input data D1 and sent to a CRC error detection circuit 23.

Then, in the recording format control portion 20, the write data D0 is processed at every 4 channels, however, data for one channel will be referred to for description of the recording format control portion 20.

The CRC error detection circuit 23 carries out an error detection on the input data D1 by means of CRC (cyclic redundancy code), and inputs a detection result CRCK to a system control circuit 24 in a computer configuration including CPU.

Then, when detecting an error of the input data D1 according to the detection result CRCK of the CRC error detection circuit 23, the system control circuit 24 sends it back to the host interface control part 14 as an error detection signal ER.

As a result, for example, the host interface control part 14 executes resending with reference to the write data D0 in which an error is present.

The buffer memory 22 buffers one recording track TR as described with Figs. 5A and 5B with reference to the input data D1, and sends a first buffer data D2 according to the recording data DATA obtained consequently to a first multiplexer 25.

In addition to the first buffer data D2, a first supplementary data PD1 for the tape mark track information TM sent from a tape mark generation circuit 26, dummy data for the dummy data track information DMY sent from a dummy data generation circuit 27, and the first supplementary data PD1 to the recording data DATA sent from a supplementary data generation circuit 28 are inputted each to the first multiplexer 25.

Thus the first multiplexer 25 generates a second buffer data D3 by adding the first supplementary data D1 to the recording data DATA of the first buffer data D2 according to a control signal CNT inputted from the system control circuit 24, and sends it to a second multiplexer 29.

In addition to the second buffer data D3, the directory information table DIT sent from a directory information table memory 30, and the subcode data SCD generated in a subcode generation circuit 31 according to a content of the directory information table 30 are inputted to the second multiplexer 29.

Practically, the directory information table DIT described with Fig. 7 is stored in the directory information table memory 30, and the subcode generation circuit 31 generates first and last position information of the data block, length information of the file information table FIT and a block number of the data block having executed rewrite in recording according to a content of the directory information table DIT.

Thus the second multiplexer 25 forms the format described with Figs. 5A and 5B by adding the subcode data SCD to the second buffer data D3 according to the control signal CNT inputted from the system control circuit 24, and then sends it to a C3 code generation circuit 32 as third buffer data D4.

As described with Figs. 5A and 5B, the C3 code generation circuit 32 generates the C3 code C3 of 8 [BYTE] to add it to the third buffer data D4, and sends a recording track data D5 obtained consequently to an interleaving circuit 33.

The interleaving circuit 33 executes interleaving for the four tracks shown in Fig. 6 by loading a recording track data D5 for the four tracks into an interleave memory in sequence and outputting it in the predetermined order, and then sends second recording track data D6 obtained consequently to a third multiplexer 34.

In addition to the second recording track data D6, the second supplementary data PD1 sent from a second supplementary data generation circuit 35, and synchronizing code data sent from a synchronizing code generation circuit 36 are inputted to the third multiplexer 34.

Thus the third multiplexer 34 adds the second supplementary data PD2 and the synchronizing code data to the second recording track data D6 according to the control signal CNT inputted from the system control circuit 24, and sends a third recording track data D7 thus obtained to a parallel-serial conversion circuit 37.

The parallel-serial conversion circuit 37 converts the 4-channel 8-bit parallel third recording track data D7 into a serial recorder data S0 for 32 bits, which is inputted to the data recorder 13 as recording data REC through an output circuit 38.

Thus, the recording format control portion 20 of the format control part 15 executes formatting described with Figs. 5A and 5B to Fig. 7 for the write data D0 inputted from the host interface control part 14, generates the recording data REC accordingly, and then records it in the magnetic tape 1 according to ID-1 format as shown in Fig. 1 and Fig. 2.

Here, in a reproducing format portion 40 shown in Fig. 9, a serial reproducing data PB reproduced by the data recorder 13 is inputted to a serial-parallel conversion circuit 41, converted into a 4-channel 8-bit parallel first reproducing data D10, which is inputted to a deinterleaving circuit 42.

The deinterleaving circuit 42 carries out deinterleaving corresponding to interleaving of the interleaving circuit 33 by loading in the first reproducing data D10 in sequence as in the case of the interleaving circuit 33 of the recording format portion 20 and outputting in the predetermined order, and inputs a second reproducing data D11 obtained consequently to a C3 error correction circuit 43.

The C3 error correction circuit 43 carries out an error correction for the second reproducing data D11 by means of the C3 code C3 added by the C3 code generation circuit 32 of the recording format control portion 20, and sends a third reproducing data D12 thus obtained.

Practically, of the third reproducing data D12, which corresponds to the user recording data track UDT, as shown in Fig. 7, is inputted to a buffer memory 44, and which corresponds to the directory information table DIT is inputted to a subcode memory 45 and a directory information table memory 46.

In the buffer memory 44, the first supplementary data PD1 included in the third reproducing data D12 is deleted, inputted to a memory circuit 47 as a fourth reproducing data D13 and synchronized with an external clock, and is then sent to the host interface control part 14 as read data D14 outputted from the reproducing format control portion 40.

Then, where the directory information table DIT inputted to the directory information table memory 46 is updated, the system control circuit 24 sends update information UDD of the directory information table DIT to the data recorder 13 together with a data recorder control signal CDIR, and updates a content of the directory information table DIT on the magnetic tape 1.

Further the system control circuit 24 sends an answer to the data reproducing request inputted from the host interface control part 14 to the host interface control part 14 as a control signal CHIC together with output data D14.

Thus the reproducing format control portion 20 of the format control part 15 subjects the reproducing data PB reproduced by the data recorder 13 to formatting counter to the formatting described with Figs. 5A and 5B to Fig. 7, generates the read data D14 and sends it to the host interface control part 14.

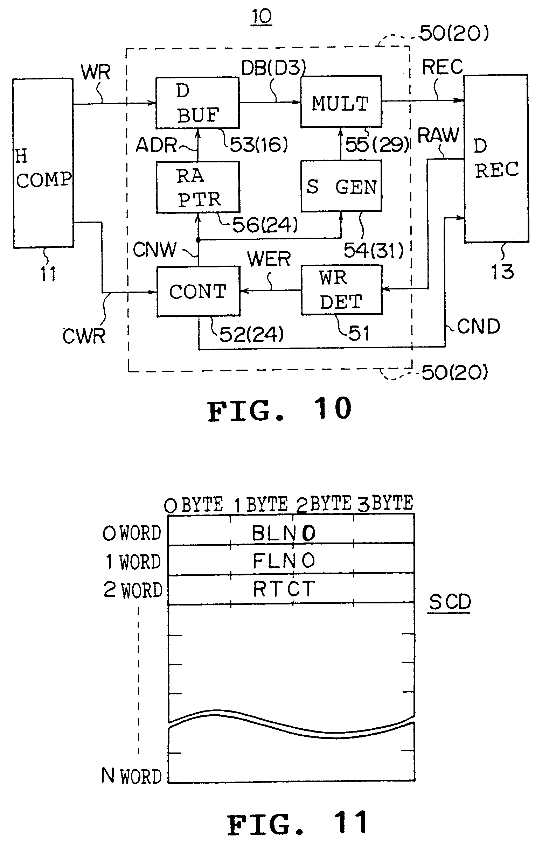

In Fig. 10 wherein portions corresponding to those of Fig. 3 and Fig. 8 are denoted by like reference characters, a reference numeral 50 denotes a write retry circuit for realizing write retry method according to the embodiment of the present invention, which is constructed from adding a write error detection circuit 51 to the above-described recording format control portion 20.

Practically a write instruction CWR sent from the host computer 11 is inputted to the control table 17 through the host interface control part 14, interpreted by a control circuit 52 (included in the system control circuit 24) of a write retry circuit 50, and the write data WR sent thereafter is loaded in a data buffer 53 constructed in the memory 16.

The write data WR is transferred in a block unit, for example, for 32 [BYTE] (comprising one recording track on the magnetic tape 1) at every write instruction WR, and is loaded successively in a block memory formed within the data buffer 53.

Then, when a transfer end instruction of the write data WR is inputted from the host computer 11, the control circuit 52 computes a volume of data loaded in the data buffer 53, generates subcode data loaded in the data buffer 53, generates subcode data comprising the volume of data and additional information of the block to record and writes it in a memory of a subcode generation circuit 54 (31).

The write data WR thus loaded in the data buffer 53 is sent to a multiplexer 55 (29) at a timing whereby a forced recording instruction is inputted from the host computer 11 or at a timing whereby the block memory of the data buffer 53 is filled as a recording data block DB read in blocks by the control circuit 52.

When a read start address is specified from a read address pointer 56 (included in the system control circuit 24) according to a recording control signal CNW inputted from the control circuit 52, the data buffer 53 executes reading from the read start address, and a read address is incremented automatically thereafter and so read.

Further the multiplexer 55 adds the subcode data SCD generated by the subcode generation circuit 54 to the recording data block DB according to the recording control signal CNW inputted from the control circuit 52, and applies the C3 code, as described with Fig. 8, for the recording data block thus obtained to interleaving.

The multiplexer 55 transfers the result obtained as above to the recorder 13 as recording data REC, and records it in the recording track on the magnetic tape 1.

Then in this case, the data recorder 13 is controlled so as to operate for recording according to a data recorder control signal CND inputted from the control circuit 52.

The subcode data SCD added to the recording data block DB has data shown in Fig. 11 added in addition to user data track information UDT indicating that the recording track is a user data track as described with Figs. 5A and 5B to Fig. 7.

That is, the subcode data SCD is constructed with 4 [BYTE] as one word, the block number BLNO of the recording data block DB is recorded to the first one word, a file number FLNO of the recording data block DB is recorded to the next second word, and the write retry frequency RTCT is recorded to the third word following further thereto.

Here in the case of the embodiment, the data recorder 13 has a so-called read-after-write function for reproducing the recorded recording data REC immediately, sends the reproducing data RAW to a write error detection circuit 51 of the write retry circuit 50, detects and corrects errors internally for the reproducing data RAW, and when there arises an error which cannot be corrected, an error detection signal is added to the reproducing data RAW.

The write error detection circuit 51 detects errors for the reproducing data RAW inputted from the data recorder 13, and when an error is detected, or the error detection signal is added to the reproducing data RAW, it sends a recording error signal WER indicating that the error has arisen to the control circuit 52 along with the block number BLNO of the recording data block DB to retry write.

Based on the block number BLNO inputted along with the recording error signal WER, the control circuit 52 then sends the recording control signal CNW for specifying the block number BLNO of the recording data block DB to start recording again for write retry processing to the read address pointer 56.

In addition the control circuit 52 increments the write retry frequency RTCT of the subcode data SCD one to the subcode generation circuit 54, and sends the recording control signal CNW for identifying the other subcode SCD as before retry.

Thus in the write retry circuit 50, the write data WR loaded in the data buffer 53 is read from the recording data block DB wherein an error has arisen, and the subcode data SCD with the retry count frequency RTCT incremented one by the multiplexer 55 likewise is added and recorded in the recording track on the magnetic tape 1, thus executing write retry process.

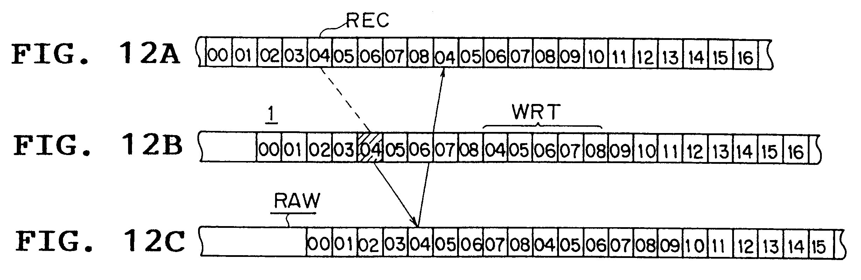

In the aforementioned construction, when, for example, the recording data REC with the block number BLNO shown in Fig. 12A added thereto is transferred to the data recorder 13, the recording track number with the block number BLNO added in sequence correspondingly to the recording data REC is formed, as shown in Fig. 12B on the magnetic tape 1.

Then the data recorder 13 reproduces the recording track concurrently, the reproducing data RAW thus obtained has the block number BLNO added in sequence as shown in Fig. 12C and is sent to the write error detection circuit 51 of the write retry circuit 50.

Here, for example, when the write error detection circuit 51 detects an error on the reproducing data RAW with the block number coming in "04", the write retry circuit 50 starts a write retry process from "04" of the block number BLNO, and as shown in Fig. 12B in result, the recording track with the block number BLNO starting from "04" is formed, as a write retry portion, in sequence on the magnetic tape 1 correspondingly to the recording data REC.

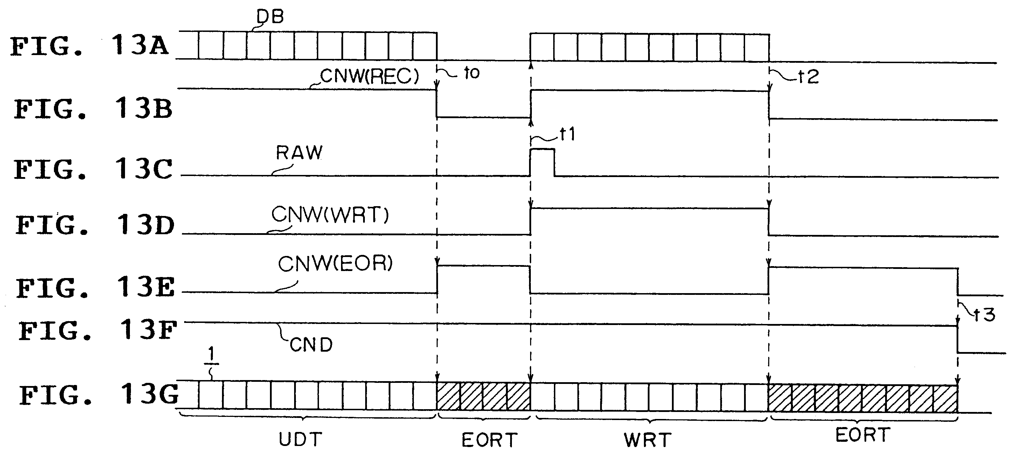

Further in the above-constructed write retry circuit 50, as shown in Figs. 13A to 13G, the control circuit 52 sends the recording control signal CNW (REC) (Fig. 13B) for closing read of the data buffer 53 to the read address pointer 56 at a timing whereby a recording end instruction is inputted from the host computer 11, or at a timing of a point in time t0 when the recording data block (Fig. 13A) to record in a block memory of the data buffer 53 has gone, thus read of the recording data block coming to end.

The control circuit 52 then sends the recording control signal CNW (EOR) (Fig. 13E) for generating the subcode data SCD according to the recording end information EOR for predetermined data blocks as described with Fig. 6 to the subcode generation circuit 54, and thus a recording end information track EORT (Fig. 7 and Fig. 13G) is formed for predetermined recording tracks on the recording track of the magnetic tape 1 in the data recorder 13 following the user data recording track UDT according to the recording data REC.

It such state, when the write error detection circuit 51 detects an error at a timing of point in time t1 for the reproducing data RAW (Fig. 13C) inputted from the data recorder 13, the control circuit 52 sends the recording control signals CNW (REC) and (WRT) for executing the aforementioned retry process to the read address pointer 56 and the subcode generation circuit.

In result the recording track of the write retry portion WRT is formed on the magnetic tape 1 midway of the recording end information track EORT, and the recording end information track EORT is again formed by an end of the data block.

Then, in case an error does not arise on the reproducing data RAW in the midst of recording of the recording end information track EORT for predetermined blocks, the control circuit 52 closes a recording of the recording end information track EORT at a timing of point in time t3, sends the data recorder control signal CND to the data recorder 13 at the same time, thereby stopping the data recorder 13.

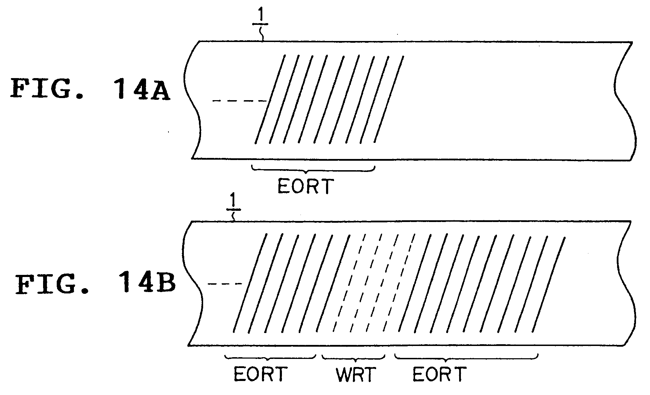

Thus, when a write error arises at the time of recording end to a write retry process, the recording track of the write retry portion WRT is formed midway of the recording end information track EORT as compared with the case where the recording end information track EORT is recorded in a predetermined number to a normal end, as shown in Fig. 14A, and then the recording end information track EORT of a predetermined number is formed again.

According to the method mentioned above, even when it is detected that a recording error occurs by simultaneous reproducing the reproduction data RAW in recording, the data is recorded again from the data block occurring the recording error. As a result, the write retry method in which the write retry processing can be executed at high speed may be realized without stopping the data recorder 13.

Further according to this method, since the write retry process is realized without stopping the data recorder 13 and rewinding the magnetic tape 1, a damage of the magnetic tape 1 according to a retry operation can be prevented.

According to this method, still further, since the write retry process is realized without stopping the data recorder 13 and rewinding the magnetic tape 1, a reliable write retry process may be realized even in such magnetic recording apparatus which is not provided with a high-speed stop and rewind motion.

Thus, a bit error rate is enhanced remarkably as a whole, and the optimal data recorder 13 may be realized as an external recording apparatus of the host computer system 11.

In the above-described embodiment, an arrangement if such that data at every four tracks is subjected to interleaving, however, the present invention is not necessarily limited thereto, and thus, for example, data at eight tracks may be subjected to interleaving.

In the above-described embodiment, while a frequency of the write retry process that the write retry circuit carries out is not particularly limited, however, a limit of, for example, ten times or so will be provided instead, and in case the write retry frequency in the subcode data exceeds the limit, a message such as "unable to record" or the like may be applied to the recording data and so transmitted to the host computer.

Further in the above-described embodiment, a description has referred to the case where the present invention is applied to an external memory of the computer, however, the present invention is not necessarily limited thereto, and thus is applicable extensively to various magnetic recording and reproducing apparatuses.

As described above, according to the present invention, recording data are recorded with sequentially adding block numbers at every predetermined blocks, and the reproduction data obtained by simultaneous reproducing are monitored. When there is detected an error of the reproduction data, data is recorded again from the block number with the error occurrence. Thereby a data recording method in which the recording data can be recorded again without stopping an operation of the recording medium may be realized.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

**Claims**

1. A data recording method comprising the steps of:

recording (13) data (REC ) with sequentially adding block numbers (BLNO) at every predetermined block;

monitoring (17, 51) a reproduction data (PB) obtained by simultaneously reproducing said reproduction data (RAW); and

when an error of said reproduction data is detected, recording again said record data from the data having a block number of an error occurrence.

2. A data recording apparatus comprising:

recording means (13) for recording data with sequentially adding block numbers (BLNO) at every predetermined block on tape (1 ) record medium;

monitor means (17, 51) for monitoring said simultaneous reproduction data;

control means (12, 52) for making said recording means record again, when said monitor means (17) detects the occurrence of an error, said record data from the data having a block number of the error occurrence.

3. A data recording apparatus according to claim 2, wherein said recording means (13) records obliquely said record data on a magnetic tape (1) as said tape record medium by means of rotary magnetic head.

FIG. 1 (PRIOR ART)

EP 0 504 801 A2

FIG. 2 (PRIOR ART)

<u>10</u>

WR                    REC

| H COMP | | HI CONT | | F CONT | | D REC |

11    RD       14           15    PB    13

| C TBL | | MEM |

17           16

12

## FIG. 3

10[m]           <u>1</u>          15[m]

PBOT    LBOT      AREC       LEOT     PEOT

## FIG. 4A

5[m]                10[m]

NEOT

## FIG. 4B

DITA   NRA     UDA         VEOVA

FIG. 5A

204[BYTE]
36,108[BYTE]
2,816[BYTE]
320[BYTE]
32,768[BYTE]
TR
PD2  SCD  DATA  X[BYTE]  C3

FIG. 5B

94[BYTE]  102[BYTE]  8[BYTE]
SCD, DATA, PD1  C3

FIG. 6

204[BYTE]  36,108[BYTE]

| | | |
|---|---|---|
| TR1 | PD2 | SCDX4 |
| TR2 | PD2 | DATAX4 |
| TR3 | PD2 | PD1X4 |
| TR4 | PD2 | C3X4 |

FIG. 7

EP 0 504 801 A2

FIG. 8

EP 0 504 801 A2

FIG. 9

EP 0 504 801 A2

10

50(20)

| WR | | DB(D3) | | REC |
|---|---|---|---|---|

```
H
COMP          D          MULT          D
              BUF                      REC
  11      ADR      53(16)     55(29)    RAW
          RA                  S  GEN
          PTR
              56(24)                    54(31)
         CNW                   WER
         CWR    CONT           WR        CND
                               DET
                52(24)         51
```

50(20)

## FIG. 10

|  | 0 BYTE | 1 BYTE | 2 BYTE | 3 BYTE |
|---|---|---|---|---|
| 0 WORD | | BLN0 | | |
| 1 WORD | | FLN0 | | |
| 2 WORD | | RTCT | | |

SCD

N WORD

## FIG. 11

FIG. 12A

| REC | | | | | | | | | | | | | | | | | | | | | | |
|-----|---|---|---|---|---|---|---|---|---|---|---|---|---|---|---|---|---|---|---|---|---|---|
| 00 | 01 | 02 | 03 | 04 | 05 | 06 | 07 | 08 | 04 | 05 | 06 | 07 | 08 | 09 | 10 | 11 | 12 | 13 | 14 | 15 | 16 |

FIG. 12B

_1_                       WRT

| 00 | 01 | 02 | 03 | 04 | 05 | 06 | 07 | 08 | 04 | 05 | 06 | 07 | 08 | 09 | 10 | 11 | 12 | 13 | 14 | 15 | 16 |

FIG. 12C

RAW

| 00 | 01 | 02 | 03 | 04 | 05 | 06 | 07 | 08 | 04 | 05 | 06 | 07 | 08 | 09 | 10 | 11 | 12 | 13 | 14 | 15 |

EP 0 504 801 A2

FIG. 13A

DB

FIG. 13B          CNW(REC)        t0        t2

FIG. 13C          RAW        t1

FIG. 13D          CNW(WRT)

FIG. 13E          CNW(EOR)

FIG. 13F          CND        t3

FIG. 13G          1

UDT        EORT        WRT        EORT

EP 0 504 801 A2

FIG. 14A

EORT

FIG. 14B

EORT    WRT    EORT